# EUROPEAN PATENT APPLICATION

(11) **EP 4 239 097 A1**
(43) Date of publication of application: **06.09.2023**
(21) Application number: 21906123.1
(22) Date of filing: 13.10.2021
(51) Int. Cl.: C22C 38/00, B23K 35/30, B23K 35/362, B23K 35/368

(54) **SUBMERGED ARC WELDING WIRE, AND METHOD FOR MANUFACTURING WELD JOINT USING SAME**

(30) Priority: 17.12.2020 JP 2020209187
(71) Applicant: JFE Steel Corporation, Tokyo 100-0011 (JP)
(72) Inventor: WATANABE, Kazufumi, Tokyo 100-0011 (JP); TAKADA, Atsushi, Tokyo 100-0011 (JP); ANDO, Akiyoshi, Tokyo 100-0011 (JP); OKABE, Takatoshi, Tokyo 100-0011 (JP); UEDA, Keiji, Tokyo 100-0011 (JP)
(74) Representative: Grünecker Patent- und Rechtsanwälte PartG mbB
(86) International application number: PCT/JP2021/037917
(87) International publication number: WO 2022/130759

(57) **Abstract**

A submerged arc welding wire is provided that can favorably weld a high-Mn content steel material for cryogenic environment use and can reduce the occurrence of hot crack during welding, namely, has excellent hot crack resistance.

The submerged arc welding wire has a composition including, by mass%, C: 0.20 to 0.80%, Si: 0.15 to 0.90%, Mn: 15.0 to 30.0%, P: 0.030% or less, S: 0.030% or less, Cr: 6.0 to 15.0%, and N: 0.120% or less, the balance being Fe and incidental impurities. Where necessary, the wire may contain one or two selected from Ni and Mo, may further contain one, or two or more selected from V, Ti, and Nb, and may additionally contain one, or two or more selected from Cu, Al, Ca, and REM.

## Description

### Technical Field

The present invention relates to a submerged arc welding wire, in particular, to a submerged arc welding wire that is used for welding a high-Mn content steel material for cryogenic environment use and that results in excellent hot crack resistance, specifically, is resistant to the occurrence of hot crack during welding. The present invention also relates to a method for producing a weld joint using the wire.

### Background Art

Submerged arc welding (hereinafter, also written as "SAW") is a welding process in which an electrode wire is continuously fed into a granular flux supplied beforehand on a base material, and an arc is struck between the tip of the electrode wire and the base material to weld them continuously. SAW achieves highly efficient and stable welding operation, and can produce weld metals that have excellent mechanical performance. Thus, the process is applied to relatively large structures, such as ships, buildings, and bridges.

Environmental regulations are more rigorous in recent years. The demand is increasing for liquefied natural gas (hereinafter, also written as LNG) that does not contain sulfur and is thus regarded as a clean fuel without emission of air pollutants, such as sulfur oxides. To ensure that LNG can be transported or stored, LNG transportation or storage containers (tanks) are required to maintain excellent cryogenic impact toughness at or below a temperature of -162°C that is the liquefaction temperature of LNG.

To satisfy excellent cryogenic impact toughness that is required, for example, aluminum alloys, 9% Ni steel, and austenite stainless steel are conventionally used as materials for containers (tanks) or the like for the above purposes.

However, aluminum alloys have low tensile strength and entail increasing of the wall thickness of a structure that is designed. Aluminum alloys are also low in weldability. Furthermore, 9% Ni steel is economically disadvantageous because an expensive Ni-based material should be used as the welding material. Furthermore, austenite stainless steel has drawbacks in that it is expensive and the strength of the base material is low.

Due to these problems, recent studies of materials for LNG transportation or storage containers (tanks) are directed to high-Mn content steel containing about 10 to 35 mass% Mn (hereinafter, also written as "high-Mn steel"). High-Mn steel is characterized in that the steel has an austenite phase even at a cryogenic temperature and does not undergo brittle fracture, and also in that the steel has high strength compared with austenite stainless steel. There are demands for the development of welding methods and welding materials capable of stably welding such high-Mn content steel materials.

To meet such demands, for example, Patent Literature 1 proposes "a high-strength weld joint having excellent cryogenic impact toughness and a flux-cored arc welding wire for the weld joint". The flux-cored arc welding wire described in Patent Literature 1 is a wire that has a composition including, by wt%, C: 0.15 to 0.8%, Si: 0.2 to 1.2%, Mn: 15 to 34%, Cr: 6% or less, Mo: 1.5 to 4%, S: 0.02% or less, P: 0.02% or less, B: 0.01% or less, Ti: 0.09 to 0.5%, N: 0.001 to 0.3%, TiO₂: 4 to 15%, a total of one or more selected from SiO₂, ZrO₂, and Al₂O₃: 0.01 to 9%, a total of one or more selected from K, Na, and Li: 0.5 to 1.7%, and one or more of F and Ca: 0.2 to 1.5%, the balance being Fe and incidental impurities. Patent Literature 1 describes that welding with the flux-cored arc welding wire can effectively produce a weld joint that has excellent low-temperature toughness with an absorbed energy of 28 J or more in a Charpy impact test at a test temperature of -196°C and has high strength with a room-temperature tensile strength of 400 MPa or more. Furthermore, it is described that the weld joint attains excellent hot crack resistance by virtue of the Mo content in the wire composition being controlled to Mo: 1.5% or more.

Furthermore, Patent Literature 2 proposes "a gas metal arc welding solid wire". The gas metal arc welding solid wire described in Patent Literature 2 is a wire that has a composition including, by mass%, C: 0.2 to 0.8%, Si: 0.15 to 0.90%, Mn: 17.0 to 28.0%, P: 0.03% or less, S: 0.03% or less, Ni: 0.01 to 10.00%, Cr: 0.4 to 4.0%, Mo: 0.01 to 3.50%, B: less than 0.0010%, and N: 0.12% or less, the balance being Fe and incidental impurities. Where necessary, the wire may contain one, or two or more selected from V, Ti, and Nb, and one, or two or more selected from Cu, Al, Ca, and REM. Patent Literature 2 describes that welding with the gas metal arc welding solid wire generates less fume and can produce a high-strength weld joint that has high strength with a room-temperature yield strength (0.2% proof stress) of 400 MPa or more and has excellent cryogenic impact toughness with an absorbed energy vE₋₁₉₆ of 28 J or more in a Charpy impact test at a test temperature of -196°C.

### Citation List

### Patent Literature

PTL 1: Japanese Unexamined Patent Application Publication (Translation of PCT Application) No. 2017-502842
PTL 2: WO 2020/039643

### Summary of Invention

### Technical Problem

However, studies by the present inventors have found that hot crack occurs during welding according to the techniques described in Patent Literature 1 and Patent Literature 2.

An object of the present invention is to solve the problems in the art discussed above and provide a welding wire suited for submerged arc welding that can reduce the occurrence of hot crack during welding and can favorably weld a high-Mn content steel material for cryogenic environment use so as to stably form a weld joint having high strength and excellent cryogenic toughness at the same time.

The term "high strength" as used herein means that the room-temperature yield strength (0.2% proof stress) of a weld metal fabricated in accordance with the requirements specified in JIS Z 3111 is 400 MPa or more. The term "excellent cryogenic toughness" means that a weld metal fabricated in accordance with the requirements specified in JIS Z 3111 has an absorbed energy vE₋₁₉₆ of 28 J or more in a Charpy impact test at a test temperature of -196°C. Solution to Problem

In order to achieve the above object, the present inventors carried out extensive studies first on factors that would affect hot crack during submerged arc welding of high-Mn steel. As a result, the present inventors have found that one of the factors giving rise to hot crack is the segregation of P into the last-solidified region of the weld metal. Furthermore, the present inventors have found that 6.0 mass% or more Cr present in the composition of the welding wire forms Cr phosphides in the liquid phase of the weld metal to reduce the segregation of P into the last-solidified region of the weld metal, and thereby further acts to suppress the occurrence of hot crack.

The present inventors also studied the composition of a submerged arc welding wire that would be necessary in order for a weld metal fabricated in accordance with the requirements specified in JIS Z 3111 to achieve the desired high strength and the desired excellent cryogenic toughness at the same time. As a result, the present inventors have found that the composition of the welding wire needs to be such that the contents of C and Si are controlled to the ranges of, by mass%, C: 0.20 to 0.80% and Si: 0.15 to 0.90%, the contents of Mn and Cr are controlled to the specific ranges of Mn: 15.0 to 30.0% and Cr: 6.0 to 15.0%, and the contents of P, S, and N are reduced to P: 0.030% or less, S: 0.030% or less, and N: 0.120% or less. That is, the weld joint is to be fabricated using the above wire.

The present invention has been completed based on the above finding and further studies. A summary of the present invention is as follows.
[1] A submerged arc welding wire having a composition including, by mass%, C: 0.20 to 0.80%, Si: 0.15 to 0.90%, Mn: 15.0 to 30.0%, P: 0.030% or less, S: 0.030% or less, Cr: 6.0 to 15.0%, and N: 0.120% or less, the balance being Fe and incidental impurities.
[2] The submerged arc welding wire according to [1], wherein the composition further includes, by mass%, one or two selected from Ni: 10.00% or less and Mo: 3.50% or less.
[3] The submerged arc welding wire according to [1] or [2], wherein the composition further includes, by mass%, one, or two or more selected from V: 1.0% or less, Ti: 1.0% or less, and Nb: 1.00% or less.
[4] The submerged arc welding wire according to any one of [1] to [3], wherein the composition further includes, by mass%, one, or two or more selected from Cu: 1.00% or less, Al: 0.100% or less, Ca: 0.010% or less, and REM: 0.020% or less.
[5] The submerged arc welding wire according to any one of [1] to [4], wherein the wire is a solid wire or a flux-cored wire.
[6] A method for producing a weld joint, including submerged arc welding a high-Mn content steel material using the submerged arc welding wire described in any one of [1] to [5] .
[7] The method for producing a weld joint according to [6], wherein the Mn content, by mass%, in the high-Mn content steel material is 15.0 to 30.0%.
[8] The method for producing a weld joint according to [7], wherein the high-Mn content steel material has a composition including, by mass%, C: 0.10 to 0.80%, Si: 0.05 to 1.00%, Mn: 15.0 to 30.0%, P: 0.030% or less, S: 0.030% or less, Cr: 2.5 to 15.0%, and N: 0.120% or less, the balance being Fe and incidental impurities.
[9] The method for producing a weld joint according to any one of [7] and [8], wherein the composition further includes, by mass%, one or two selected from Ni: 10.00% or less and Mo: 3.50% or less.
[10] The method for producing a weld joint according to any one of [7] to [9], wherein the composition further includes, by mass%, one, or two or more selected from V: 2.0% or less, Ti: 1.0% or less, and Nb: 1.00% or less.
[11] The method for producing a weld joint according to any one of [7] to [10], wherein the composition further includes, by mass%, one, or two or more selected from Cu: 1.00% or less, Al: 0.100% or less, Ca: 0.010% or less, and REM: 0.020% or less.

### Advantageous Effects of Invention

The submerged arc welding wire according to the present invention is a welding material that can weld a high-Mn content steel material with reduced occurrence of hot crack during SAW so as to easily produce a weld joint having high strength and excellent cryogenic toughness, thus attaining significant effects in industry.

### Description of Embodiments

The present invention pertains to a welding wire suited for submerged arc welding of a high-Mn content steel material. The use of the wire of the present invention can reduce the occurrence of hot crack during submerged arc welding of high-Mn content steel materials. Furthermore, the wire of the present invention is a welding material that can produce a weld joint with high strength and excellent cryogenic toughness. Specifically, a weld metal fabricated by submerged arc welding in accordance with JIS Z 3111 has high strength with a 0.2% proof stress at room temperature of 400 MPa or more, and has excellent cryogenic toughness with an absorbed energy of 28 J or more in a Charpy impact test at a test temperature of -196°C.

### [Submerged arc welding]

As already described, submerged arc welding (SAW) is a welding process in which an electrode wire is continuously fed into a granular flux supplied beforehand on a base material, and an arc is generated between the tip of the electrode wire and the base material to weld them continuously. This submerged arc welding is advantageous in that welding can be performed efficiently by applying a large current to increase the deposition rate of the wire.

The types of wires include solid wires, and flux-cored wires that include a flux within the wires. Any of these wires can be used in the present invention. A flux-cored wire for use herein is produced so that the total of the chemical compositions of the steel skin, the metal powder, and the flux powder that are used will be the target chemical composition of the welding material.

For example, the submerged arc welding process is carried out in the following manner. Two steel plates or steel materials (thickness: 6 to 100 mm) as a base material are butted against each other in accordance with JIS Z 3111 and form a 45° V-shaped groove. After a flux is supplied, a solid wire (diameter: about 4.0 mmø) or a flux-cored wire (diameter: about 3.2 mmø) provided is fed in a flat position without being preheated. Welding is then performed under conditions in which current: 350 to 650 A (DCEP), voltage: 28 to 36 V, welding speed: 20 to 80 cm/min, welding heat input: 0.7 to 8.0 kJ/mm, and interpass temperature: 100 to 150°C. The thickness of the steel plate or the steel material as the base material is more preferably 9 to 80 mm. The thickness is still more preferably 9 to 60 mm.

### [Basic composition of wires]

The basic composition of the submerged arc welding wire of the present invention includes, by mass%, C: 0.20 to 0.80%, Si: 0.15 to 0.90%, Mn: 15.0 to 30.0%, P: 0.030% or less, S: 0.030% or less, Cr: 6.0 to 15.0%, and N: 0.120% or less, the balance being Fe and incidental impurities. First, the reasons as to why the basic composition is thus limited will be described. In the following, "%" in the composition means "mass%".

### [C: 0.20 to 0.80%]

Carbon is an element that acts to increase the strength of a weld metal by solid solution hardening, and also stabilizes the austenite phase to enhance the cryogenic impact toughness of a weld metal. In order to obtain these effects, the C content needs to be 0.20% or more. If, however, the C content exceeds 0.80%, carbides are precipitated to cause a decrease in cryogenic toughness and to increase the probability of welding cracks (hot crack) during welding. Thus, the C content is limited to the range of 0.20 to 0.80%. The C content is preferably 0.40% or more. The C content is preferably 0.60% or less. The C content is more preferably 0.45% or more and the C content is preferably 0.55% or less.

### [Si: 0.15 to 0.90%]

Silicon acts as a deoxidizing agent to increase the yield of Mn, and also increases the viscosity of a melt metal to effectively allow a bead to maintain the shape stably. In order to obtain these effects, the Si content needs to be 0.15% or more. If, however, the Si content exceeds 0.90%, the cryogenic toughness of a weld metal is lowered. Furthermore, silicon segregates during solidification to form liquid phases at interfaces of solidified cells, causing a decrease in hot crack resistance. Thus, the Si content is limited to the range of 0.15 to 0.90%. The Si content is preferably 0.20% or more. The Si content is preferably 0.70% or less. The Si content is more preferably 0.30% or more. The Si content is more preferably 0.60% or less.

### [Mn: 15.0 to 30.0%]

Manganese is an element that stabilizes the austenite phase at low cost, and needs to be contained at 15.0% or more in the present invention. If the Mn content is less than 15.0%, ferrite phases are formed in a weld metal to cause a significant decrease in toughness at cryogenic temperatures. If, on the other hand, the Mn content exceeds 30.0%, manganese segregates excessively during solidification to induce welding cracks (hot crack). Thus, the Mn content is limited to the range of 15.0 to 30.0%. The Mn content is preferably 18.0% or more. The Mn content is preferably 27.0% or less. The Mn content is more preferably 20.0% or more. The Mn content is more preferably 26.0% or less.

### [P: 0.030% or less]

Phosphorus is an element that segregates at crystal grain boundaries to induce hot crack. It is therefore preferable to remove as much phosphorus as possible. Up to 0.030% phosphorus is acceptable. Thus, the P content is limited to 0.030% or less. Excessive dephosphorization raises the refining costs. Thus, the P content is preferably controlled to 0.003% or more. The P content is more preferably 0.003% or more and the P content is more preferably 0.020% or less.

### [S: 0.030% or less]

In a weld metal, sulfur is present as sulfide inclusion MnS. MnS serves as fracture starting points and lowers the cryogenic toughness. Thus, the S content is limited to 0.030% or less. Excessive desulfurization raises the refining costs. Thus, the S content is preferably controlled to 0.001% or more. The S content is more preferably 0.001% or more and the S content is more preferably 0.020% or less.

### [Cr: 6.0 to 15.0%]

Chromium acts as an element that stabilizes the austenite phase at cryogenic temperatures to enhance the cryogenic toughness of a weld metal. Chromium also acts to enhance the strength of a weld metal. Furthermore, chromium narrows the temperature range of the solid-liquid coexistence region of a melt metal to effectively suppress the occurrence of hot crack, and also forms Cr phosphides in the liquid phase to suppress hot crack caused by phosphorus. In order to obtain these effects, the Cr content needs to be 6.0% or more. If the Cr content is less than 6.0%, the above effects cannot be ensured. If, on the other hand, the Cr content exceeds 15.0%, Cr carbides are formed to cause a decrease in cryogenic toughness. Thus, the Cr content is limited to the range of 6.0 to 15.0%. The Cr content is preferably more than 7.0% and the Cr content is preferably 15.0% or less. The Cr content is more preferably 8.0% or more. The Cr content is more preferably 13.0% or less.

### [N: 0.120% or less]

Nitrogen is an element that is incidentally contained. Similarly to carbon, nitrogen effectively contributes to an enhancement in the strength of a weld metal and stabilizes the austenite phase to contribute to a stable enhancement in cryogenic toughness. These effects are noticeable when the N content is 0.003% or more. If, on the other hand, the N content exceeds 0.120%, nitrides are formed to cause a decrease in low-temperature toughness. Thus, the N content is limited to 0.120% or less. The N content is preferably 0.004% or more. The N content is preferably 0.080% or less. The N content is more preferably 0.004% or more and the N content is more preferably 0.060% or less.

### [Optional components]

The components described hereinabove are the basic components in the wire of the present invention. Where necessary, the wire of the present invention may contain one or two optional components selected from Ni: 10.00% or less and Mo: 3.50% or less in addition to the basic composition described above. Furthermore, the wire may additionally contain one, or two or more selected from V: 1.0% or less, Ti: 1.0% or less, and Nb: 1.00% or less. Furthermore, the wire may additionally contain one, or two or more selected from Cu: 1.00% or less, Al: 0.100% or less, Ca: 0.010% or less, and REM: 0.020% or less.

### [Ni: 10.00% or less and Mo: 3.50% or less]

Both nickel and molybdenum are elements that strengthen austenite grain boundaries. Either or both may be selected and added as required.

### [Ni: 10.00% or less]

Nickel is an element that strengthens austenite grain boundaries, and segregates at grain boundaries to enhance the cryogenic toughness. Furthermore, nickel also has an effect of stabilizing the austenite phase. Thus, an increase in the Ni content leads to stabilization of the austenite phase and enhances the cryogenic toughness of a weld metal. However, increasing the Ni content in excess of 10.00% is economically disadvantageous because of the expensiveness of the element. Thus, the Ni content is preferably limited to 10.00% or less. The Ni content is more preferably in the range of 8.00% or less. The Ni content is still more preferably in the range of 6.00% or less. The Ni content is preferably 1.00% or more.

### [Mo: 3.50% or less]

Molybdenum is an element that strengthens austenite grain boundaries, and segregates at grain boundaries to enhance the strength of a weld metal. Furthermore, molybdenum also acts to enhance the strength of a weld metal by solid solution hardening. If, on the other hand, the Mo content exceeds 3.50%, molybdenum may be precipitated as carbides, which serve as fracture starting points and can cause a decrease in cryogenic toughness. Thus, the Mo content is preferably limited to the range of 3.50% or less. The Mo content is more preferably in the range of 3.00% or less. The Mo content is preferably 1.00% or more and the Mo content is preferably 3.00% or less.

### [V: 1.0% or less, Ti: 1.0% or less, and Nb: 1.00% or less]

Vanadium, titanium, and niobium are all elements that promote the formation of carbides and contribute to an enhancement in the strength of a weld metal. One, or two or more may be selected and added as required.

### [V: 1.0% or less]

Vanadium is a carbide-forming element and is precipitated as fine carbides to contribute to an enhancement in the strength of a weld metal. In order to obtain these effects, the V content is preferably 0.001% or more. If, however, the V content exceeds 1.0%, carbides are coarsened and come to serve as fracture starting points to cause a decrease in cryogenic toughness. Thus, when vanadium is present, the content thereof is preferably limited to 1.0% or less. The V content is more preferably 0.002% or more. The V content is preferably 0.8% or less. The V content is still more preferably 0.005% or more and the V content is preferably 0.6% or less.

### [Ti: 1.0% or less]

Titanium is a carbide-forming element and is precipitated as fine carbides to contribute to an enhancement in the strength of a weld metal. Furthermore, titanium is precipitated as carbides at interfaces of solidified cells of a weld metal, and thereby contributes to the suppression of the occurrence of hot crack. In order to obtain these effects, the Ti content is preferably 0.001% or more. If, however, the Ti content exceeds 1.0%, carbides are coarsened and come to serve as fracture starting points to cause a decrease in cryogenic toughness. Thus, when titanium is present, the content thereof is preferably limited to 1.0% or less. The Ti content is more preferably 0.002% or more. The Ti content is preferably 0.8% or less. The Ti content is still more preferably 0.005% or more and the Ti content is preferably 0.6% or less.

### [Nb: 1.00% or less]

Niobium is a carbide-forming element and is precipitated as carbides to contribute to an enhancement in the strength of a weld metal. Furthermore, niobium is precipitated as carbides at interfaces of solidified cells of a weld metal, and thereby contributes to the suppression of the occurrence of hot crack. In order to obtain these effects, the Nb content is preferably 0.001% or more. If, however, the Nb content exceeds 1.00%, carbides are coarsened and come to serve as fracture starting points to cause a decrease in cryogenic toughness. Thus, when niobium is present, the content thereof is preferably limited to 1.00% or less. The Nb content is more preferably 0.002% or more. The Nb content is preferably 0.80% or less. The Nb content is still more preferably 0.005% or more and the Nb content is preferably 0.60% or less.

### [Cu: 1.00% or less, Al: 0.100% or less, Ca: 0.010% or less, and REM: 0.020% or less]

Copper is an element that contributes to austenite stabilization. Aluminum is an element that contributes to the stabilization of bead shape. Calcium and REM are elements that contribute to an enhancement in workability. One, or two or more may be selected and added as required.

### [Cu: 1.00% or less]

Copper is an element that stabilizes the austenite phase, and stabilizes the austenite phase even at cryogenic temperatures to enhance the cryogenic toughness of a weld metal. In order to obtain these effects, the Cu content is preferably 0.01% or more. If, however, the Cu content exceeds 1.00%, copper segregates during solidification to induce hot crack. Thus, when copper is present, the content thereof is preferably limited to 1.00% or less. The Cu content is more preferably 0.02% or more. The Cu content is preferably 0.90% or less. The Cu content is still more preferably 0.05% or more and the Cu content is preferably 0.60% or more.

### [Al: 0.100% or less]

Aluminum acts as a deoxidizing agent, and has an important action to increase the viscosity of a melt metal and allow the bead shape to be maintained stably. Furthermore, aluminum narrows the temperature range of the solid-liquid coexistence region of a melt metal to contribute to the suppression of the occurrence of hot crack of a weld metal. These effects are noticeable when the Al content is 0.005% or more. Thus, the Al content is preferably 0.002% or more. If, however, the Al content exceeds 0.100%, the viscosity of a melt metal is so increased that a bead does not spread to increase the probability of defects, such as incomplete fusion. Thus, when aluminum is present, the content thereof is preferably limited to 0.100% or less. The Al content is more preferably 0.002% or more and the Al content is preferably 0.060% or less. The Al content is still more preferably 0.005% or more and the Al content is preferably 0.040% or more.

### [Ca: 0.010% or less]

Calcium binds to sulfur in a melt metal to form the high-melting point sulfide CaS. CaS has a higher melting point than MnS and thus contributes to the suppression of the occurrence of hot crack of a weld metal. These effects are noticeable when the Ca content is 0.001% or more. If, on the other hand, the Ca content exceeds 0.010%, the arc is disturbed during SAW to make it difficult to perform welding stably. Thus, when calcium is present, the content thereof is preferably limited to 0.010% or less. The Ca content is more preferably 0.001% or more and the Ca content is preferably 0.008% or less. The Ca content is more preferably 0.006% or less.

### [REM: 0.020% or less]

REM indicates rare earth elements, such as Sc, Y, La, and Ce. REM are powerful deoxidizing agents and are present in the form of REM oxides in a weld metal. The REM oxides serve as nucleus formation sites at the time of solidification, and thereby reduce the size of crystal grains and contribute to an enhancement in the strength of a weld metal. These effects are noticeable when the REM content is 0.001% or more. If, however, the REM content exceeds 0.020%, the arc stability is lowered. Thus, when REM are present, the content thereof is preferably limited to 0.020% or less. The REM content is more preferably 0.002% or more. The REM content is preferably 0.018% or less. The REM content is still more preferably 0.005% or more and the REM content is preferably 0.015% or less.

### [Balance components]

The balance other than the components described above is Fe and incidental impurities. Examples of the incidental impurities include O, Sn, Sb, As, Pb, and Bi. The amount of O in the wire is preferably 0.15% or less. The amounts of Sn, Sb, and As are preferably each 0.005% or less. The amounts of Pb and Bi are preferably each 0.0001% or less. As long as the basic composition and the contents of optional components described above are satisfied, the wire may contain other elements not mentioned above. Such embodiments are also within the technical scope of the present invention.

### [Methods for manufacturing welding wires]

Next, methods for manufacturing the SAW wires (solid wires and flux-cored wires) of the present invention will be described.

The welding wire of the present invention may be manufactured by any method without limitation as long as the molten steel that is used has the chemical composition described hereinabove. Any of the conventional welding wire manufacturing methods may be used.

The solid wire of the present invention is preferably obtained by a casting step in which a molten steel having the above-described chemical composition is smelted in a usual steelmaking furnace, such as an electric furnace or a vacuum melting furnace, and is cast into, for example, a mold having a predetermined shape; a heating step in which the steel ingot obtained is heated to a predetermined temperature; a hot rolling step in which the steel ingot heated is hot rolled to give a steel material (a rod) having a predetermined shape; and a cold rolling step in which the steel material (the rod) obtained is cold rolled (cold drawn) several times and, where necessary, is subjected to an annealing step at an annealing temperature of 900 to 1200°C to give a wire having a desired size.

For example, the flux-cored wire of the present invention is preferably manufactured as follows. A steel sheet (thickness: 0.5 mm) as a steel skin material that has a composition including 0.05 to 0.20% C, 0.15 to 0.30% Si, 0.2 to 1.2% Mn, and the balance of Fe is subjected to cold bending in the width direction to form a U shape. Subsequently, a metal powder and a flux powder that have been conditioned so that the target wire composition will be obtained are sealed in the steel skin. The steel skin is then cold drawn to give a SAW flux-cored wire.

The chemical composition of the above metal powder is not particularly limited. The powder is a metal powder or an alloy powder that includes metal components which are added supplementarily to the chemical composition of the steel skin material so as to obtain the desired composition of the welding wire as a whole. The components in the flux powder are not particularly limited. The components in the flux powder may be the same as or similar to the components in a welding flux described below.

### [Welding fluxes]

The welding flux that is used together with the above SAW wire (the solid wire or the flux-cored wire) is not particularly limited and may be a generally known sintered flux or fused flux. Specifically, a powder material may be used that has a chemical composition including SiO₂: 20 to 40%, MnO: 8 to 15%, TiO₂: 5 to 10%, Al₂O₃: 10 to 20%, and MgO: 20 to 30%. As an example, the composition may comprise 38% SiO₂, 11% MnO, 8% TiO₂, 16% Al₂O₃, and 27% MgO. However, the welding fluxes in the present invention are not limited to those described above.

### [Methods for producing weld joints]

A method will be described in which a weld joint is produced by welding steel materials as a base material by a submerged arc welding process using the submerged arc welding wire described hereinabove.

Steel materials as a base material are butted against each other, and the welding flux described above is supplied. The submerged arc welding wire that has the chemical composition described hereinabove is fed continuously, and an arc is generated to weld the metals. A weld joint can be thus produced.

### [Steel materials]

The steel material as a base material is preferably a high-Mn content steel material. Preferably, the high-Mn content steel material is a cryogenic high-strength steel material, and the content by mass% is 15.0 to 30.0%. Specifically, the steel material has a basic composition including, by mass%, C: 0.10 to 0.80%, Si: 0.05 to 1.00%, Mn: 15.0 to 30.0%, P: 0.030% or less, S: 0.030% or less, Cr: 2.5 to 15.0%, and N: 0.120% or less, the balance being Fe and incidental impurities. Where necessary, the high-Mn content steel material may contain one or two optional components selected from Ni: 10.00% or less and Mo: 3.50% or less in addition to the above basic composition. Furthermore, the steel material may additionally contain one, or two or more selected from V: 2.0% or less, Ti: 1.0% or less, and Nb: 1.00% or less. Furthermore, the steel material may additionally contain one, or two or more selected from Cu: 1.00% or less, Al: 0.100% or less, Ca: 0.010% or less, and REM: 0.020% or less.

To produce the high-Mn content steel material, for example, a steel material obtained by conventional steelmaking and casting processes may be hot rolled while controlling conditions, such as heating conditions and rolling reduction, and the hot rolled steel may be then cooled to give a steel material (a steel plate). For example, the thickness of the rolled steel plate is 6 to 100 mm, preferably 9 to 80 mm, and more preferably 9 to 60 mm.

### EXAMPLES

Hereinbelow, the present invention will be further described based on EXAMPLES. EXAMPLES below are only illustrative of detailed examples of the present invention and do not limit the scope of the present invention.

Molten steels having a composition described in Table 1 were smelted in a vacuum melting furnace and were cast to form steel ingots weighing 1000 kg. The steel ingots obtained were heated to 1200°C, hot rolled, and then cold rolled to give submerged arc welding solid wires having a diameter of 4.0 mmø.

Separately, flux-cored wires were produced that had a steel skin, and a metal powder and a flux powder included within the steel skin. The steel skin material was a steel sheet (thickness: 0.5 mm) that had a composition including 0.1% C, 0.2% Si, 0.5% Mn, and the balance of Fe. The steel skin material was subjected to cold bending in the width direction to form a U shape. Subsequently, a metal powder and a flux powder that had been conditioned so that the wire composition described in Table 2 would be obtained were sealed in the steel skin. The steel skin was then cold drawn to give a welding flux-cored wire (diameter: 3.2 mmo). The values in the chemical compositions described in Table 2 are each the total of the component in the steel skin, the metal powder, and the flux powder.

Next, cryogenic high-Mn content steel plates (thickness: 20 mm) were provided as test plates. Two test plates were butted against each other in accordance with JIS Z 3111 and a 45° V-shaped groove was formed. Submerged arc welding was performed using the solid wire or the flux-cored wire as the welding material to form a weld metal in the groove. The cryogenic high-Mn content steel plates used as the test plates were steel plates that had a composition including 0.5% C, 0.4% Si, 25% Mn, 3% Cr, and the balance of Fe. At the time of welding, a sintered flux powder that had a composition comprising 38% SiO₂, 11% MnO, 8% TiO₂, 16% Al₂O₃, and 27% MgO was used.

In the submerged arc welding, the solid wire (diameter: 4.0 mmø) or the flux-cored wire (diameter: 3.2 mmø) having a composition described in Table 1 or Table 2 was fed in a flat position without being preheated, and welding was performed under conditions in which current: 450 to 650 A (DCEP), voltage: 28 to 36 V, welding speed: 20 cm/min, heat input: 3.5 to 7.0 (kJ/mm), and interpass temperature: 100 to 150°C.

### [Hot crack resistance]

After the welding, a cross section of the weld metal was observed with an optical microscope (×30 magnification) to determine the presence or absence of hot crack in the weld metal. When hot crack was present, the hot crack resistance was low and was rated as "×". When no hot crack was found, the hot crack resistance was excellent and was rated as "o".

### [Weld bead appearance]

Furthermore, the appearance of the weld bead was visually observed to evaluate the weld bead appearance. When an undercut, an overlap, and/or a pit was found, the weld bead appearance was judged to be poor and was rated as "×". When such defects were not found, the bead appearance was judged to be good and was rated as "o".

### [Characteristics of weld metals]

A test piece for tensile test (diameter of parallel part: 6 mmø) of the weld metal, and a Charpy impact test specimen (V-notch) of the weld metal were sampled from the weld metal and were subjected to a tensile test and an impact test in accordance with the requirements specified in JIS Z 3111.

### [Tensile test: 0.2% Proof stress (MPa)]

Three test pieces were tensile tested at room temperature, and the results (0.2% proof stress) obtained were averaged to give tensile characteristics of the weld metal using the wire. As described hereinabove, the target value of 0.2% proof stress at room temperature in the present invention is 400 MPa or more.

### [Impact test: Absorbed energy vE₋₁₉₆ (J)]

Three Charpy impact test specimens were tested at a test temperature of -196°C to determine the absorbed energy vE₋₁₉₆. The results were averaged to give the cryogenic toughness of the weld metal using the wire.

As described hereinabove, the target value of the absorbed energy vE₋₁₉₆ in the present invention is 28 J or more.

The results obtained are described in Table 3.

**[Table 1]**

| Steel No. | Chemical composition (mass%) | | | | | | | | | | | Remarks |
|---|---|---|---|---|---|---|---|---|---|---|---|---|
| | C | Si | Mn | P | S | Cr | N | Ni | Mo | V, Ti, Nb | Cu, Al, Ca, REM | |
| A | 0.49 | 0.42 | 25.8 | 0.013 | 0.005 | 12.9 | 0.002 | - | - | - | - | INV. EX. |
| B | 0.72 | 0.65 | 26.1 | 0.011 | 0.007 | 7.4 | 0.009 | - | - | Nb: 0.25 | Al: 0.005 | INV. EX. |
| C | 0.52 | 0.51 | 25.8 | 0.008 | 0.005 | 11.0 | 0.005 | 2.01 | - | - | - | INV. EX. |
| D | 0.68 | 0.61 | 26.2 | 0.005 | 0.002 | 8.6 | 0.008 | - | 2.10 | - | - | INV. EX. |
| E | 0.65 | 0.58 | 26.0 | 0.012 | 0.021 | 7.2 | 0.020 | 6.91 | 1.51 | - | Al: 0.004 | INV. EX. |
| F | 0.72 | 0.42 | 17.4 | 0.005 | 0.016 | 7.5 | 0.100 | 4.17 | 1.25 | - | Al: 0.002 | INV. EX. |
| G | 0.55 | 0.26 | 23.4 | 0.017 | 0.024 | 7.4 | 0.081 | 3.10 | 0.02 | - | Al 0.012 | INV. EX. |
| H | 0.27 | 0.41 | 15.3 | 0.014 | 0.017 | 9.3 | 0.005 | 0.02 | 1.84 | - | Al: 0.004, REM: 0.011 | INV. EX. |
| I | 0.45 | 0.75 | 21.6 | 0.016 | 0.010 | 10.5 | 0.012 | 3.60 | 0.12 | Ti: 0.1, Nb: 0.44 | Cu:0.81, Al: 0.013, REM:0.018 | INV. EX. |
| J | 0.46 | 0.76 | 23.6 | 0.004 | 0.010 | 9.1 | 0.065 | 3.89 | 2.60 | Nb: 0.14 | - | INV. EX. |
| K | 0.59 | 0.81 | 19.9 | 0.013 | 0.014 | 6.3 | 0.022 | 4.60 | 1.78 | - | Al: 0.009, Ca: 0.006 | INV. EX. |
| L | 0.25 | 0.38 | 20.8 | 0.019 | 0.006 | 7.9 | 0.063 | 6.77 | 1.23 | - | - | INV. EX. |
| M | 0.26 | 0.75 | 28.4 | 0.004 | 0.009 | 10.4 | 0.072 | 4.56 | 1.70 | - | Al: 0.014, Ca: 0.001 | INV. EX. |
| N | 0.44 | 0.67 | 26.8 | 0.027 | 0.018 | 8.1 | 0.017 | 0.99 | 0.29 | Ti: 0.2 | - | INV. EX. |
| O | 0.36 | 0.23 | 25.8 | 0.012 | 0.017 | 11.2 | 0.115 | 9.63 | 2.53 | - | - | INV. EX. |
| P | 0.78 | 0.58 | 19.9 | 0.020 | 0.029 | 9.4 | 0.022 | 6.67 | 2.29 | V: 0.8 | Cu: 0.02 | INV. EX. |
| Q | 0.21 | 0.46 | 22.7 | 0.023 | 0.022 | 14.6 | 0.111 | 5.23 | 2.87 | V:0.1, Nb: 0.31 | REM: 0.010 | INV. EX. |
| R | 0.51 | 0.44 | 16.5 | 0.009 | 0.007 | 12.3 | 0.061 | 1.22 | 1.40 | - | Al: 0.015 | INV. EX. |
| **S** | **0.14** | 0.30 | **13.1** | 0.023 | 0.019 | 6.2 | 0.080 | 1.41 | 0.04 | Nb: 0.80 | Al: 0.013 | COMP. EX. |
| **T** | 0.30 | 0.89 | 25.4 | 0.009 | 0.008 | 0.3 | 0.079 | 3.59 | 0.43 | - | Al: 0.012 | COMP. EX. |
| **U** | 0.46 | **1.63** | **35.3** | 0.023 | 0.013 | **5.3** | 0.085 | 2.14 | 0.39 | - | - | COMP. EX. |
| **V** | 0.53 | 0.62 | 26.2 | 0.026 | **0.079** | 10.4 | 0.042 | 1.38 | **5.30** | Ti: 0.1, Nb: 0.06 | Cu: 0.06 | COMP. EX. |
| **W** | **0.11** | 0.46 | 20.5 | 0.016 | 0.026 | **4.9** | 0.005 | 1.27 | 0.05 | - | - | COMP. EX. |
| **X** | 0.24 | 0.23 | 18.7 | **0.057** | 0.025 | 7.3 | 0.093 | 1.60 | 2.20 | - | - | COMP. EX. |
| **Y** | **0.97** | 0.40 | 19.6 | 0.015 | 0.017 | 7.4 | 0.007 | 2.66 | 0.96 | - | AI:0.015, REM: 0.004 | COMP. EX. |
| **Z** | 0.50 | **0.09** | 23.5 | 0.025 | 0.02 | 6.2 | 0.005 | 2.72 | 0.05 | V: 0.3, Nb: 0.20 | - | COMP. EX. |

**[Table 2]**

| Flux-cored No. | Chemical composition (mass%) | | | | | | | | | | | Remarks |
|---|---|---|---|---|---|---|---|---|---|---|---|---|
| | C | Si | Mn | P | S | Cr | N | Ni | Mo | V,Ti,Nb | Cu,Al,Ca,REM | |
| C1 | 0.42 | 0.67 | 26.4 | 0.007 | 0.008 | 8.0 | 0.004 | - | - | - | - | INV. EX. |
| C2 | 0.69 | 0.54 | 20.8 | 0.005 | 0.007 | 12.4 | 0.007 | 5.8 | - | - | AI: 0.009 | INV. EX. |
| C3 | 0.55 | 0.51 | 24.5 | 0.010 | 0.012 | 9.4 | 0.087 | - | 2.41 | - | - | INV. EX. |
| C4 | 0.64 | 0.56 | 21.7 | 0.025 | 0.008 | 9.1 | 0.095 | 6.43 | 1.83 | - | Al: 0.018 | INV. EX. |
| C5 | 0.32 | 0.38 | 19.2 | 0.022 | 0.022 | 12.3 | 0.011 | 4.66 | 3.04 | - | - | INV. EX. |
| C6 | 0.67 | 0.75 | 21.7 | 0.008 | 0.009 | 9.6 | 0.101 | 9.62 | 0.64 | - | AI: 0.016 | INV. EX. |
| C7 | 0.25 | 0.43 | 22.6 | 0.026 | 0.015 | 10.6 | 0.069 | 3.83 | 1.40 | - | - | INV. EX. |
| **C8** | 0.32 | 0.52 | **12.8** | 0.012 | 0.017 | 10.9 | 0.084 | 4.52 | 1.97 | - | - | COMP. EX. |
| **C9** | 0.61 | 0.56 | 21.3 | **0.043** | **0.033** | 8.3 | 0.050 | 2.36 | 1.70 | - | Al: 0.013 | COMP. EX. |
| **C10** | 0.36 | 0.28 | 16.1 | 0.022 | 0.010 | **1.6** | 0.110 | 1.93 | 2.91 | - | Al: 0.010 | COMP. EX. |
| **C11** | 0.45 | **1.31** | 19.7 | 0.014 | 0.021 | 7.7 | 0.085 | 0.02 | 1.68 | - | - | COMP. EX. |

**[Table 3]**

| Wire No. | Steel No./Flux-cored No. | Hot crack resistance | Weld bead appearance | Weld metal characteristics* | | Remarks |
|---|---|---|---|---|---|---|
| | | | | 0.2% Proof stress (MPa) | Absorbed energy vE₋₁₉₆(J) | |
| 1 | A | ○ | ○ | 469 | 57 | INV. EX. |
| 2 | B | ○ | ○ | 409 | 40 | INV. EX. |
| 3 | C | ○ | ○ | 457 | 54 | INV. EX. |
| 4 | D | ○ | ○ | 452 | 44 | INV. EX. |
| 5 | E | ○ | ○ | 429 | 50 | INV. EX. |
| 6 | F | ○ | ○ | 433 | 45 | INV. EX. |
| 7 | G | ○ | ○ | 417 | 44 | INV. EX. |
| 8 | H | ○ | ○ | 451 | 43 | INV. EX. |
| 9 | I | ○ | ○ | 451 | 54 | INV. EX. |
| 10 | J | ○ | ○ | 461 | 50 | INV. EX. |
| 11 | K | ○ | ○ | 421 | 42 | INV. EX. |
| 12 | L | ○ | ○ | 430 | 50 | INV. EX. |
| 13 | M | ○ | ○ | 464 | 56 | INV. EX. |
| 14 | N | ○ | ○ | 425 | 44 | INV. EX. |
| 15 | O | ○ | ○ | 484 | 66 | INV. EX. |
| 16 | P | ○ | ○ | 465 | 55 | INV. EX. |
| 17 | Q | ○ | ○ | 525 | 69 | INV. EX. |
| 18 | R | ○ | ○ | 487 | 55 | INV. EX. |
| 19 | **S** | ○ | ○ | **387** | **22** | COMP. EX. |
| 20 | **T** | **×** | ○ | **334** | **14** | COMP. EX. |
| 21 | **U** | **×** | ○ | **385** | **23** | COMP. EX. |
| 22 | **V** | ○ | ○ | 477 | **15** | COMP. EX. |
| 23 | **W** | **×** | ○ | 370 | **23** | COMP. EX. |
| 24 | **X** | **×** | ○ | 433 | 30 | COMP. EX. |
| 25 | **Y** | **×** | ○ | 431 | 33 | COMP. EX. |
| 26 | **Z** | o | **×** | 409 | 30 | COMP. EX. |
| 27 | C1 | ○ | ○ | 429 | 43 | INV. EX. |
| 28 | C2 | ○ | ○ | 476 | 63 | INV. EX. |
| 29 | C3 | ○ | ○ | 464 | 46 | INV. EX. |
| 30 | C4 | ○ | ○ | 456 | 44 | INV. EX. |
| 31 | C5 | ○ | ○ | 499 | 50 | INV. EX. |
| 32 | C6 | ○ | ○ | 451 | 50 | INV. EX. |
| 33 | C7 | ○ | ○ | 463 | 44 | INV. EX. |
| 34 | **C8** | ○ | ○ | 474 | **24** | COMP. EX. |
| 35 | **C9** | **×** | ○ | 444 | **20** | COMP. EX. |
| 36 | **C10** | **×** | ○ | 375 | **13** | COMP. EX. |
| 37 | **C11** | **×** | ○ | 435 | **23** | COMP. EX. |

| | | | | | | |
|---|---|---|---|---|---|---|
| *) In accordance with JIS Z 3111 | | | | | | |

The welding materials of INVENTIVE EXAMPLES successfully formed a weld metal that was free from hot crack during welding, namely, had excellent hot crack resistance, and had a good weld bead appearance.

Furthermore, the INVENTIVE EXAMPLES satisfied the target values described hereinabove, specifically, had a yield strength (0.2% proof stress) at room temperature of 400 MPa or more, and an absorbed energy vE₋₁₉₆ of 28 J or more in the Charpy impact test at a test temperature of - 196°C. Thus, the welding materials (the wires) were demonstrated to be capable of giving a weld metal having high strength and excellent cryogenic toughness at the same time.

In contrast, the weld metals obtained in COMPARATIVE EXAMPLES outside the range of the present invention were low in hot crack resistance and suffered hot crack, or formed a defective weld bead with poor weld bead appearance, or had a 0.2% proof stress at room temperature of less than 400 MPa and/or an absorbed energy vE₋₁₉₆ of less than 28 J, thus failing to achieve the target strength and the target cryogenic toughness at the same time.

COMPARATIVE EXAMPLES will be discussed individually below.

The wire No. 19 had a lower C content than the range of the present invention, and consequently the weld metal had a 0.2% proof stress of less than 400 MPa and failed to achieve the desired high strength. Furthermore, the Mn content was lower than the range of the present invention, and consequently the weld metal had an absorbed energy vE₋₁₉₆ of less than 28 J at a test temperature of -196°C and failed to attain the desired excellent cryogenic toughness.

The wire No. 20 had a lower Cr content than the range of the present invention, and consequently the weld metal had a 0.2% proof stress of less than 400 MPa and failed to achieve the desired high strength. Furthermore, segregation of phosphorus into the last-solidified regions during the welding could not be suppressed, thus causing hot crack. Furthermore, the weld metal had an absorbed energy vE₋₁₉₆ of less than 28 J at a test temperature of -196°C and failed to attain the desired excellent cryogenic toughness.

The wire No. 21 had higher Si and Mn contents than the ranges of the present invention, and a lower Cr content than the range of the present invention, and consequently silicon, manganese, and phosphorus had segregated into the last-solidified regions during the welding, thus causing hot crack. Furthermore, the weld metal had a 0.2% proof stress of less than 400 MPa and failed to achieve the desired high strength. Furthermore, the weld metal had an absorbed energy vE₋₁₉₆ of less than 28 J at a test temperature of - 196°C and failed to attain the desired excellent cryogenic toughness.

The wire No. 22 had higher S and Mo contents than the ranges of the present invention, and MnS and Mo carbides serving as fracture starting points were formed. Consequently, the weld metal had an absorbed energy vE₋₁₉₆ of less than 28 J at a test temperature of -196°C and failed to attain the desired excellent cryogenic toughness.

The wire No. 23 had lower C and Cr contents than the ranges of the present invention, and consequently the weld metal had a 0.2% proof stress of less than 400 MPa and failed to achieve the desired high strength. Furthermore, segregation of phosphorus into the last-solidified regions during the welding could not be suppressed, thus causing hot crack. Furthermore, the weld metal had an absorbed energy vE₋₁₉₆ of less than 28 J at a test temperature of -196°C and failed to attain the desired excellent cryogenic toughness.

The wire No. 24 had a higher P content, and the wire No. 25 had a higher C content than the range of the present invention. Consequently, phosphorus or carbides had segregated into the last-solidified regions during the welding, thus causing hot crack.

The wire No. 26 had a lower Si content than the range of the present invention, and consequently the bead did not have a good shape and contained pits.

The wire No. 34 had a lower Mn content than the range of the present invention, and consequently the austenite phase was unstable. Thus, the weld metal had an absorbed energy vE₋₁₉₆ of less than 28 J at a test temperature of - 196°C and failed to attain the desired excellent cryogenic toughness.

The wire No. 35 had higher P and S contents than the ranges of the present invention, and consequently phosphorus and sulfur had segregated in the last-solidified regions during the welding, thus causing hot crack. Furthermore, MnS serving as fracture starting points had been formed, and consequently the weld metal had an absorbed energy vE₋₁₉₆ of less than 28 J at a test temperature of -196°C and failed to attain the desired excellent cryogenic toughness.

The wire No. 36 had a lower Cr content than the range of the present invention, and consequently the weld metal had a 0.2% proof stress of less than 400 MPa and failed to achieve the desired high strength. Furthermore, segregation of phosphorus into the last-solidified regions during the welding could not be suppressed, thus causing hot crack. Furthermore, the weld metal had an absorbed energy vE₋₁₉₆ of less than 28 J at a test temperature of -196°C and failed to attain the desired excellent cryogenic toughness.

The wire No. 37 had a higher Si content than the range of the present invention, and consequently silicon had segregated into the last-solidified regions during the welding, thus causing hot crack. Furthermore, the weld metal had an absorbed energy vE₋₁₉₆ of less than 28 J at a test temperature of -196°C and failed to attain the desired excellent cryogenic toughness.

## Claims

1. A submerged arc welding wire having a composition comprising, by mass%, C: 0.20 to 0.80%, Si: 0.15 to 0.90%, Mn: 15.0 to 30.0%, P: 0.030% or less, S: 0.030% or less, Cr: 6.0 to 15.0%, and N: 0.120% or less, the balance being Fe and incidental impurities.

2. The submerged arc welding wire according to claim 1, wherein the composition further comprises, by mass%, one or two selected from Ni: 10.00% or less and Mo: 3.50% or less.

3. The submerged arc welding wire according to claim 1 or 2, wherein the composition further comprises, by mass%, one, or two or more selected from V: 1.0% or less, Ti: 1.0% or less, and Nb: 1.00% or less.

4. The submerged arc welding wire according to any one of claims 1 to 3, wherein the composition further comprises, by mass%, one, or two or more selected from Cu: 1.00% or less, Al: 0.100% or less, Ca: 0.010% or less, and REM: 0.020% or less.

5. The submerged arc welding wire according to any one of claims 1 to 4, wherein the wire is a solid wire or a flux-cored wire.

6. A method for producing a weld joint, comprising submerged arc welding a high-Mn content steel material using the submerged arc welding wire described in any one of claims 1 to 5.

7. The method for producing a weld joint according to claim 6, wherein the Mn content, by mass%, in the high-Mn content steel material is 15.0 to 30.0%.

8. The method for producing a weld joint according to claim 7, wherein the high-Mn content steel material has a composition comprising, by mass%, C: 0.10 to 0.80%, Si: 0.05 to 1.00%, Mn: 15.0 to 30.0%, P: 0.030% or less, S: 0.030% or less, Cr: 2.5 to 15.0%, and N: 0.120% or less, the balance being Fe and incidental impurities.

9. The method for producing a weld joint according to any one of claims 7 and 8, wherein the composition further comprises, by mass%, one or two selected from Ni: 10.00% or less and Mo: 3.50% or less.

10. The method for producing a weld joint according to any one of claims 7 to 9, wherein the composition further comprises, by mass%, one, or two or more selected from V: 2.0% or less, Ti: 1.0% or less, and Nb: 1.00% or less.

11. The method for producing a weld joint according to any one of claims 7 to 10, wherein the composition further comprises, by mass%, one, or two or more selected from Cu: 1.00% or less, Al: 0.100% or less, Ca: 0.010% or less, and REM: 0.020% or less.
